# EUROPÄISCHE PATENTSCHRIFT

(11) **EP 1 420 992 B1**
(45) Veröffentlichungstag und Bekanntmachung des Hinweises auf die Patenterteilung: **16.03.2005**
(21) Anmeldenummer: 02772143.0
(22) Anmeldetag: 12.08.2002
(51) Int. Cl.: B61H 3/00

(54) **KLOTZBREMSEINHEIT, INSBESONDERE FÜR SCHIENENFAHRZEUGE**
SHOE BRAKE ASSEMBLY, IN PARTICULAR FOR RAIL VEHICLES
ENSEMBLE FREIN A SABOTS, EN PARTICULIER POUR VEHICULES SUR RAILS

(30) Priorität: 23.08.2001 DE 10141253
(43) Veröffentlichungstag der Anmeldung: 26.05.2004
(73) Patentinhaber: KNORR-BREMSE Systeme für Schienenfahrzeuge GmbH, 80809 München (DE)
(72) Erfinder: WIRTH, Xaver, 85737 Ismaning (DE)
(86) Internationale Anmeldenummer: PCT/EP2002/009032
(87) Internationale Veröffentlichungsnummer: WO 2003/018381

(56) Entgegenhaltungen:
- CH-A- 119 108
- DE-A- 19 840 065
- GB-A- 686 720
- GB-A- 958 104
- US-A- 2 354 309
- US-A- 2 582 755

## Beschreibung

Die vorliegende Erfindung betrifft eine Klotzbremseinheit nach dem Oberbegriff des Anspruches 1.

Aus der EP 0 665 154 B1 ist eine Klotzbremseinheit für Schienenfahrzeuge bekannt, die einen Bremsklotz umfasst, der mittels einer Zuspannvorrichtung af die Lauffläche eines Schienenrades gepresst werden kann. Für die Betätigung der Klotzbremse ist eine Aufhängevorrichtung vorgesehen, die dem Bremsklotz ermöglicht, eine gewisse seitliche Bewegung der Räder mitzuvollziehen. Durch entsprechende Druck- oder Zugglieder der Aufhängung werden die Bremsklötze dabei zur Erzeugung einer Reibkraft auf die Radlaufflächen gepresst. Die dadurch resultierende hohe Beanspruchung der Radlaufflächen ist nachteilig, da die Radlebensdauer verkürzt wird und eine Aufrauhung bzw. Riffelbildung der Lauffläche erzeugt wird. Die Aufrauhung oder Riffelbildung der Radlauffläche führen zu einem hohen Laufgeräusch beim Abrollvorgang des Rades, weshalb bei modernen Schienenfahrzeugen häufig gesonderte Scheibenbremsen vorgesehen werden, die jedoch vergleichsweise teuer sind. Ferner führt die einseitige Bremsbelastung des Rades zu hohen Wärmespannungen.

Um diese Nachteile zu vermindern, ist in der DE 19840065 ein elastischer Bremskörper offenbart, bei dem ein Tragkörper mit Ausnehmungen versehen ist, in die Reibwerkstoffelemente eingefügt sind. Diese Reibwerkstoffelemente bilden eine gemeinsame Reibfläche aus und sind elastisch gelagert. Diese elastischen Bremskörper ermöglichen zwar in einem gewissen Maß ein Einfedern oder Ausfedern der Reibwerkstoffelemente, wenn diese auf die Lauffläche des Schienenrades gepresst werden und vermeiden dadurch die Bildung von Hotspots. Allerdings wird eine Aufrauhung und Riffelbildung auf der Lauffläche nicht vollständig vermieden.

Aus der CH 119 108 A ist Schliesslich eine Klotzbremseinheit für Schienenfahrzeuge gemäss dem Oberbegriff des Anspruchs 1 bekannt.

Es ist daher Aufgabe der vorliegenden Erfindung, eine Klotzbremseinheit der eingangs genannten Art zu schaffen, die bei einfachem Aufbau und der Erzeugung hoher Bremskräfte eine Beanspruchung der Laufflächen des Rades weitgehend oder vollständig vermeidet.

Diese Aufgabe wird mit einer Klotzbremseinheit mit den Merkmalen des Anspruches 1 gelöst.

Wenn bei der Klotzbremseinheit mindestens ein Bremsklotz an einer radial nach innen gewandte Fläche des Rades zur Erzeugung der Bremskraft anlegbar ist, wird durch diesen Bremsklotz die Lauffläche des Rades nicht belastet. Dies vermeidet einerseits temperaturbedingte Spannungen während des Bremsvorganges, und andererseits wird auch die vorerwähnte Aufrauhung der Radlauffläche durch den Bremsklotz vermieden. Die Lärmentwicklung während des Rollvorganges des Rades kann somit vermindert werden. Ferner lässt sich mit der Anordnung des Bremsklotzes an einer nach innen gewandten Fläche des Rades das Tragbild zwischen dem Bremsklotz und Radlauffläche verbessern.

Gemäß der Erfindung sind mindestens zwei Bremsklötze über eine Pendelaufhängung im wesentlichen radial nach außen gegen eine Fläche des Rades bewegbar. Die Pendelaufhängung ermöglicht dabei einen Ausgleich von Vertikalbewegungen zwischen dem Fahrgestell und dem Rad, die beispielsweise durch Be- oder Entladung des Fahrzeuges entstehen.

Als wenigstens zwei Bremsklötze vorgesehen sind, die an gegenüberliegenden Seiten des Radsteges am Rad angreifen, bildet sich am Radsteg kein Moment durch die Krafteinleitung aus, da durch das beidseitige Aufbringen der Kräfte der Radsteg lediglich auf Zug beansprucht wird. Für eine effektive Krafteinleitung ist jeder Bremsklotz vorzugsweise an zwei Zugbügeln angelenkt, die über Querlaschen miteinander gelenkig verbunden sind und somit parallelogrammartig zueinander verschiebbar sind. Diese Art der Aufhängung ermöglicht es, die Position jedes Bremsklotzes beim Ein- oder Ausfedern des Rades an die Reibfläche des Rades anzupassen. Der Zugbügel kann dabei über ein oder mehrere Haltelaschen mit dem Fahrgestell gelenkig verbunden sein.

Gemäß einer bevorzugten Ausführungsform ist eine Haltelasche in unmittelbarer Nähe des Bremsklotzes an einem Zugbügel angelenkt. Dadurch kann die Klotzreibkraft am Ort ihrer Entstehung unmittelbar über die Haltelasche abgeleitet werden, wobei die steifere Anbindung des Bremsklotzes zu geringeren Bremsgeräuschen führt. Dabei kann die Haltelasche benachbart zum Bremsklotz sowohl an einem einzelnen Zugbügel als auch an einem von zwei Zugbügeln angelenkt sein.

Ferner ist es möglich, die Haltelasche an einem Druckstück zu lagern, dass beim Bremsvorgang auf den Bremsklotz wirkt.

Wenn an der Aufhängung der Klotzbremseinheit ein zweiter Bremsklotz vorgesehen ist, der gegen die Lauffläche des Rades bewegbar ist, kann eine besonders große Bremskraft erzeugt werden. Diese Doppelklotzanordnung mit außen- und innenliegenden Bremsklötzen eignet sich besonders für schwere Schienenfahrzeuge, wie Lokomotiven. Durch die beidseitige Anordnung von Bremsklötzen wird auch eine gleichmäßigere Erwärmung des Rades bewirkt.

Wenn die Klotzbremseinheit mehrere Bremsklötze umfasst, die gegen jeweils eine radial nach innen gewandte Fläche zweier benachbarter Räder anlegbar sind, kann zur Erzeugung der Kraft eine Bremszange zwischen den Rädern vorgesehen sein.

Gemäß einer weiteren bevorzugten Ausführungsform der Erfindung ist die Fläche des Rades und die gegenüberliegende Fläche des Bremsklotzes zu einem Radsteg hin leicht geneigt ausgebildet, so dass jeder Bremsklotz bei Bewegung radial nach außen durch die Neigung der Bremsfläche nach innen zu dem Radsteg hin gedrückt wird. Durch die Erzeugung einer Bremskraft sowohl an einem Abschnitt des Radsteges als auch an der radial nach innen gewandten Fläche können Wärmespannungen zwischen Spurkranz und Radsteg verringert werden, da eine gleichmäßigere Erwärmung des Rades erfolgt. Die Neigung der Bremsfläche hat den weiteren Vorteil, dass die Bremsklötze zentriert werden und eine eindeutig Zuordnung von Rad- und Klotzreibfläche gegeben ist, auch wenn Achsverschiebungen auftreten. Die Neigung liegt dabei beispielsweise in einem Bereich zwischen 3 und 30°.

Die Erfindung wird nachfolgend anhand von mehreren Ausführungsbeispielen mit Bezug auf die beigefügten Zeichnungen näher erläutert. Es zeigen:
- Fig. 1: eine geschnittene Vorderansicht auf die Klotzbremseinheit gemäß einem ersten Ausführungsbeispiel;
- Fig. 2: eine Seitenansicht auf die Klotzbremseinheit der Fig. 1;
- Fig. 3: eine Seitenansicht auf die Klotzbremseinheit der Fig. 1 bei schwerbefadenem Fahrzeug;
- Fig. 4: eine geschnittene Vorderansicht auf eine Klotzbremseinheit gemäß einem zweiten Ausführungsbeispiel;
- Fig. 5: eine Seitenansicht auf eine Klotzbremseinheit gemäß einem dritten Ausführungsbeispiel;
- Fig. 6: eine Seitenansicht auf eine Klotzbremseinheit gemäß einem vierten Ausführungsbeispiel;
- Fig. 7: eine Seitenansicht auf eine Klotzbremseinheit gemäß einem fünftem Ausführungsbeispiel, und
- Fig. 8: eine Seitenansicht auf eine Klotzbremseinheit gemäß einem sechstem Ausführungsbeispiel.

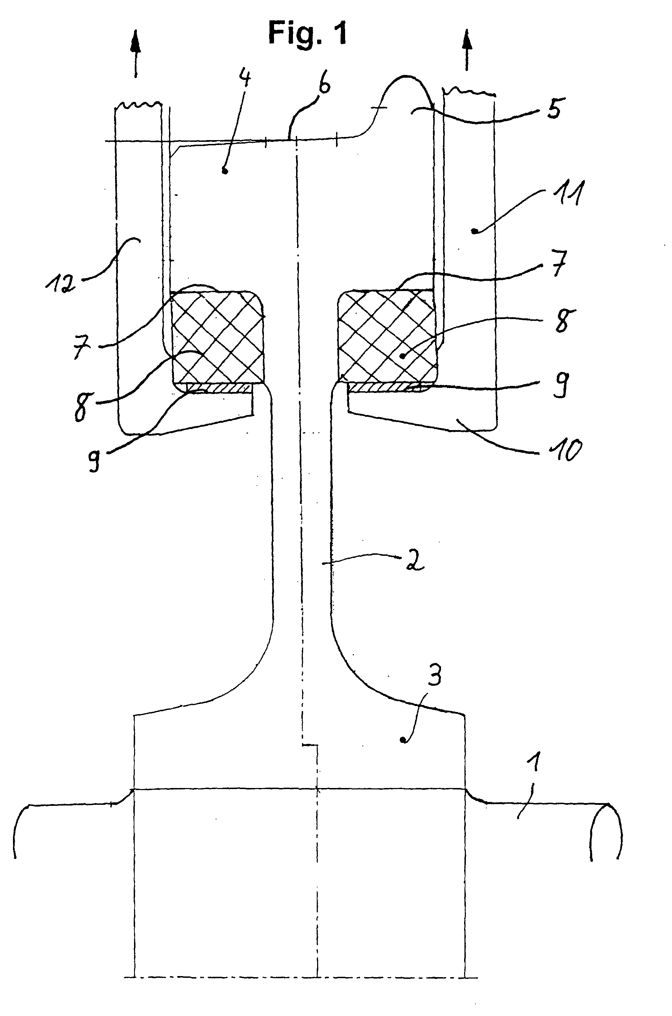

Die in den Fig. 1 bis 3 gezeigte Klotzbremseinheit umfasst ein Rad 4, das auf einer Achse 1 eines Schienenfahrzeuges angebracht ist, wobei eine Radnabe 3 auf der Achse 1 festgelegt ist. Von der Radnabe 3 erstreckt sich in radialer Richtung ein dünn ausgebildeter Radsteg 2, der in einen Spurkranz 5 des Rades 4 mündet. An der nach außen gewandten Seite ist eine Lauffläche 6 ausgebildet, die gegenüber der Horizontalen leicht schräg geneigt ist. An der radial nach innen gewandten Seite des Spurkranzes 5 sind beidseitig des Radsteges 2 Flächen 7 ausgebildet, an denen ein Bremsklotz 8 anlegbar ist. Die Bremsklötze 8 sind jeweils an einem Halter 9 aufgenommen, der gebogen ausgebildet ist und an einem Arm 10 eines Zugbügels 11 festgelegt ist. In Fig. 1 ist der rechte Bremsklotz 8 durch einen Zugbügel 11 betätigbar, während der linke Bremsklotz 8 über einen weiteren Zugbügel 12 bewegbar ist, wie dies die Pfeile andeuten.

Die Aufhängung der Bremsklötze 8 umfasst zwei Zugbügel 11, die jeweils in einem vertikalen Abstand über Gelenke 13 mit dem Halter 9 eines Bremsklotzes 8 verbunden sind. Die Zugbügel 11 sind dabei über eine erste Querlasche 15 und eine zweite Querlasche 18 miteinander verbunden. Die beiden Achsen 14 der Querlasche 15 sowie die Achsen 17 der Querlasche 18 bilden ein Rechteck aus, weshalb die Zugbügel 11 parallelogrammartig verschiebbar sind. An der Querlasche 15 ist ein Zuganker 16 gelenkig angebracht, über den eine Betätigungskraft F einleitbar ist, um die Bremsklötze 8 auf die Bremsfläche 7 zu drücken.

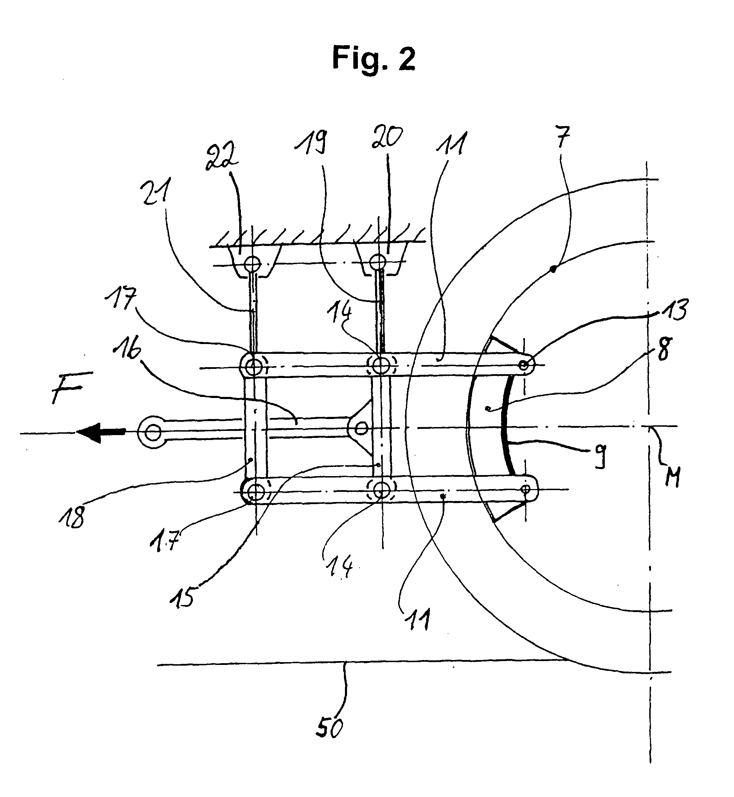

Der obere Zugbügel 11 ist über zwei Haltelaschen 19 und 21 mit dem Fahrgestell des Schienenfahrzeuges verbunden. Die Haltelasche 19 ist dabei gelenkig an einer Aufhängung 20 und die Haltelasche 21 gelenkig an einer Aufhängung 22 angebracht. In dem in Fig. 2 dargestellten Beladungsfall ist der Mittelpunkt M des Rades 4 auf der selben Höhe wie die Mittelachse des Zugankers 16, so dass bei Einleitung der Kraft F der Bremsklotz 8 mittig an dem Rad 4 angeordnet ist. Das Rad 4 rollt dabei über eine nicht näher dargestellte Schiene 50 ab.

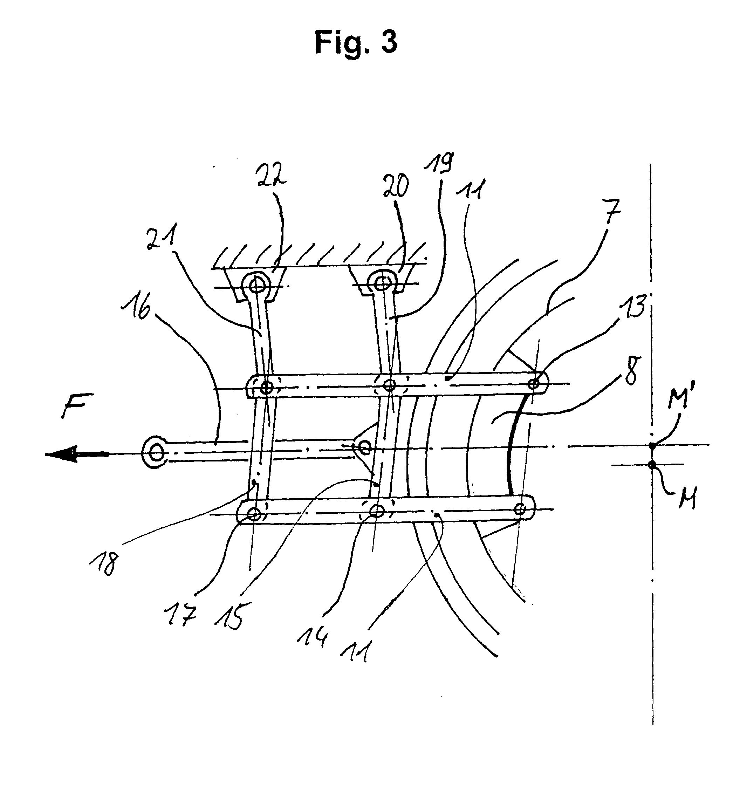

Bei dem in Fig. 3 dargestellten Belastungsfall ist das Fahrgestell beispielsweise aufgrund einer höheren Beladung leicht abgesenkt, so dass der Mittelpunkt M des Rades 4 gegenüber der Achse der Kraft F im Abstand zu M' vertikal versetzt angeordnet ist. Damit bei Einleitung der Bremskraft F der Bremsklotz sich der jeweiligen Position der Fläche 7 anpassen kann, sind die Zugbügel 11 über die Achsen 14 und 17 parallelogrammartig verschoben, so dass ein optimales Anliegen des Bremsklotzes 8 an der Fläche 7 möglich ist.

Zur Einleitung des Bremsvorganges wird über eine nicht dargestellte Bremszange eine Zugkraft F aufgebracht, die über die Aufhängung den Bremsklotz 8 auf die Fläche 7 drückt, um das gewünschte Bremsmoment zu erzeugen. Durch die Einleitung der Zugkraft F in der Mitte der Querlasche 15 wird erreicht, dass sich die beiden Zugbügel 11 gegeneinander verschieben können, wenn dies durch eine Neigungsänderung des Bremsklotzes 8 bzw. bei einer Vertikalbewegung des Rades 4 erforderlich wird. Durch eine reibschlüssige Vorspannung an den Gelenken 14 und 17 lässt sich dabei erreichen, dass nach dem Lösen der Bremse die Neigung des Bremsklotzes 8 beibehalten wird und sich erst ändert, wenn durch eine Einfederungsveränderung des Rades 4 ein anderer Neigungswinkel vorgegeben wird. Die während des Einbremsens aufgebrachte Kraft auf den Bremsklotz 8 führt dann zu einer Winkeländerung zwischen den Zugbügeln 11 und den Querlaschen 15 und 18, wobei die reibschlüssige Vorspannung dann überwunden wird.

Für den Bremsklotz 8 können sowohl Sinter-, Kunststoff- als auch Graugussklötze verwendet werden. Es ist auch möglich, sogenannte elastische Bremsklötze zu verwenden, die aus mehreren einzelnen Reibwerkstoffelementen gebildet sind, die zu der Bremsfläche hin vorgespannt sind. Hinsichtlich der möglichen Ausbildung der Bremsklötze wird auf die Offenbarung der DE 19840065 Bezug genommen.

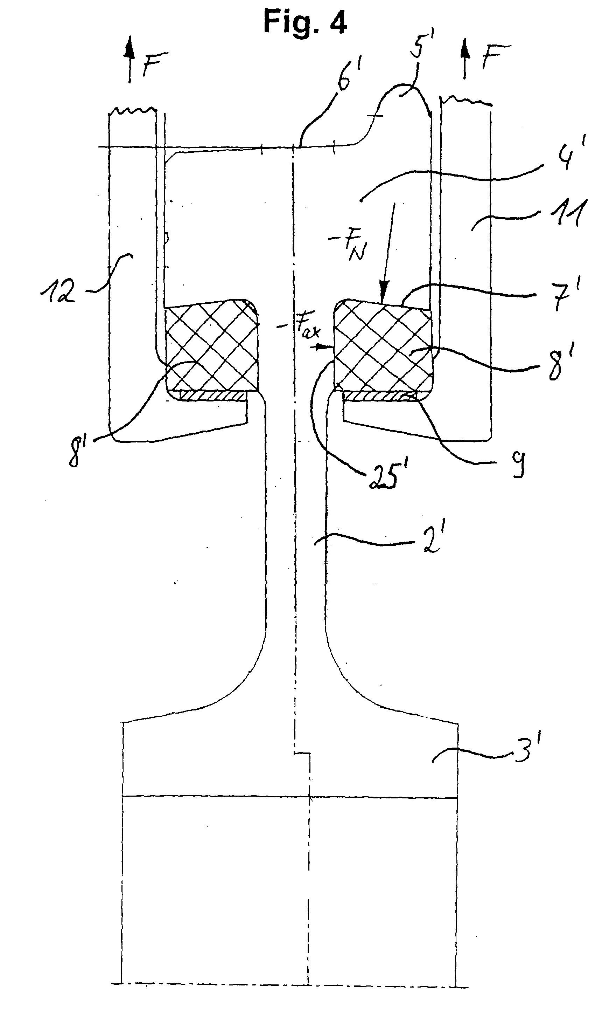

Bei dem in Fig. 4 gezeigten Ausführungsbeispiel ist eine Bremsklotzeinheit vorgesehen, bei der leicht modifizierte Bremsklötze 8' vorgesehen sind, die beidseitig eines Radsteges 2' jeweils an Zugbügeln 11 und 12 gehalten sind. Die Aufhängung der Bremsklötze 8' erfolgt wie bei dem vorangegangenen Ausführungsbeispiel.

Die Bremsklötze 8' weisen eine Reibfläche auf, die ebenso wie die Fläche 7' an dem Spurkranz 5' zu dem Radsteg 2' leicht geneigt ausgebildet ist, so dass bei Einleitung einer Kraft F über die Zugbügel 11 und 12 eine zur Vertikalen leicht geneigte Normalkraft F_{N} erzeugt wird, die den Bremsklotz 8' zu dem Radsteg 2' hin drückt. Dadurch reibt der Bremsklotz 8' nicht nur an der Fläche 7', sondern auch an einem Abschnitt 25' des Radsteges 2', an dem die Bremskraft Fₐₓ aufgebracht wird. Bei einem Bremsvorgang wird somit zusätzlich auch der Abschnitt 25' des Radsteges 2' erwärmt, was die Wärmespannungen innerhalb des Rades 4' verringert. Ferner wird durch die geneigte Ausbildung der Fläche 7' eine Zentrierung der Bremsklötze 8' zur Mitte hin bewirkt. Da beidseitig des Radsteges 2' Bremsklötze 8' vorgesehen sind, werden auftretende Axialkräfte kompensiert.

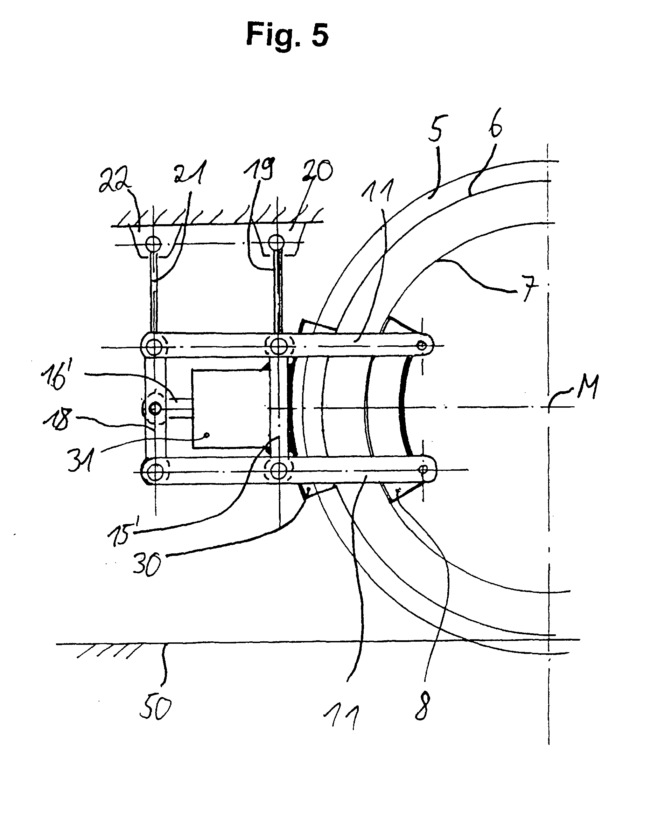

Bei dem in Fig. 5 gezeigten Ausführungsbeispiel ist zusätzlich zu dem innenliegenden Bremsklotz 8' ein außen liegender Bremsklotz 30 an der Aufhängung montiert. Hierfür ist an einer Querlasche 15' ein pneumatisch oder hydraulisch wirkender Zylinder 31 angebracht, dessen Kolbenstangenkraft auf den innen liegenden Bremsklotz 8 und dessen Gehäusereaktionskraft auf den außen liegenden Bremsklotz 30 wirkt. Die Pendelaufhängung mit den Querlaschen 15' und 18 sowie der Hängelaschen 19 und 21 erfolgt wie bei dem ersten Ausführungsbeispiel. Durch die Kombination eines innen liegenden Bremsklotzes 8 und eines außen liegenden Bremsklotzes 30 wird eine erhebliche Leistungssteigerung der Klotzbremse erreicht, wobei die beidseitige Anordnung eines Bremsklotzes 8 bzw. 30 für eine gleichmäßigere thermische Aufheizung des Rades 4 während des Bremsvorganges sorgt, so dass Wärmespannungen reduziert werden.

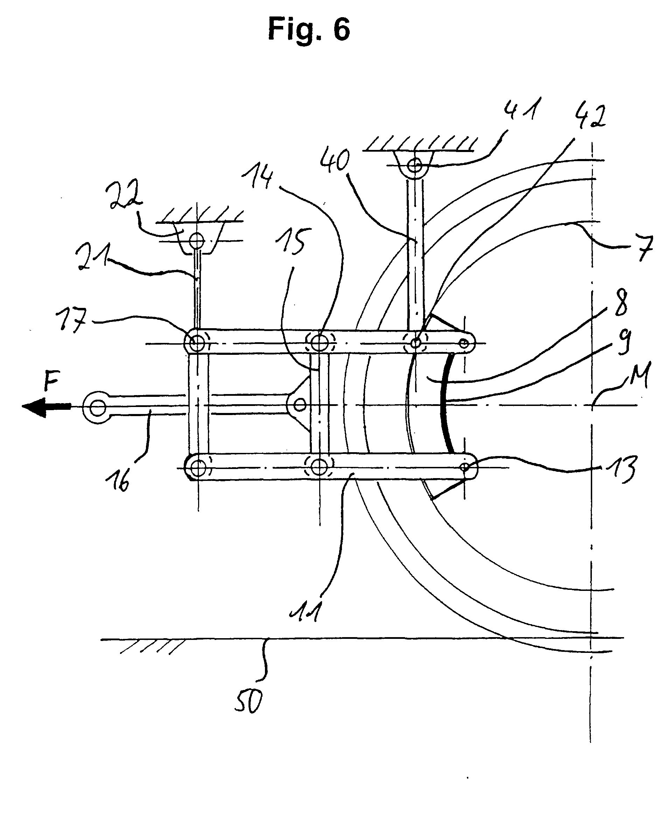

Bei dem in Fig. 6 gezeigten Ausführungsbeispiel ist beidseitig eines Radsteges jeweils ein innen liegender Bremsklotz 8 vorgesehen, der über zwei Zugbügel 11 gehalten ist. Verglichen mit dem Ausführungsbeispiel der Fig. 1 bis 3 wurde die Haltelasche 19, die an der Achse 14 des oberen Zugbügels 11 angelenkt war durch eine gesonderte Haltelasche 40 ersetzt, die an einer Achse 42 am Zugbügel 11 und einer weiteren Achse 41 am Fahrgestell angelenkt ist. Die Achse 42 befindet sich dabei in unmittelbarer Nähe des Bremsklotzes 8, zumindest noch im Bereich des Rades 4, so dass eine Klotzreibkraft am Ort ihrer Entstehung unmittelbar in die Haltelasche 40 eingeleitet werden kann. Die steifere Anbindung des Bremsklotzes 8 bei der Betätigung führt dann zu geringeren Bremsgeräuschen.

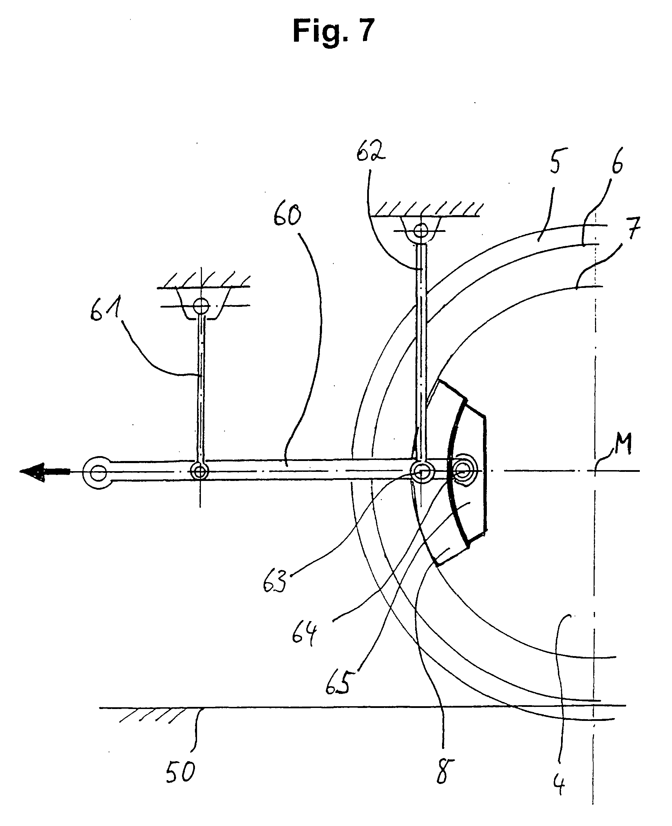

In Fig. 7 ist ein Bremsklotz über ein sogenanntes Einfachgestänge an dem Fahrgestell gelagert. Hierfür ist ein- oder beidseitig des Rades 4 ein Zugbügel 60 vorgesehen, der gleichzeitig auch den Zuganker bildet. Der Zugbügel 60 ist mit zwei Haltelaschen 61 und 62 gelenkig verbunden, die wiederum an einem nicht näher dargestellten Fahrgestell angelenkt sind. An dem dem Rad 4 zugewandten Ende des Zugbügels 60 ist dieser über eine Achse 64 mit einem Druckstück 65 verbunden, dass bei einem Bremsvorgang den Bremsklotz 8 gegen die Fläche 7 des Rades 4 presst. Die Haltelasche 62 ist dabei in unmittelbarer Nähe des Bremsklotzes an dem Zugbügel 60 angelenkt.

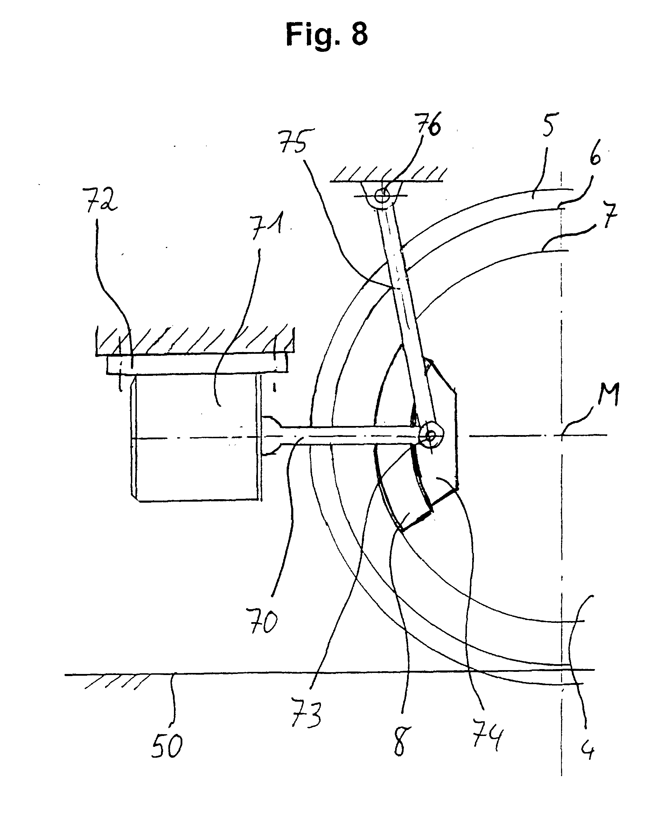

Bei dem in Fig. 8 gezeigten Ausführungsbeispiel ist die Klotzbremseinheit über ein Hebelgestänge am Fahrgestell angebracht. Zur Erzeugung einer Bremskraft wird der Bremsklotz 8 über ein Druckstück 74 gegen die Fläche 7 am Rad 4 gedrückt, wobei das Druckstück 74 über einen endseitig in einem Zylinder 71 aufgenommenen Zugbügel 70 bewegbar ist. Der Zylinder 71 ist über eine Platte 72 am Fahrgestell festgelegt und kann hydraulisch oder pneumatisch wirken oder mit einer Betätigungsmechanik versehen sein. Das Druckstück 74 ist über eine Achse 73 mit einer Haltelasche 75 verbunden, die über ein Gelenk 76 am Fahrgestell angebracht ist. Auch bei dieser Ausführungsform ist die Haltelasche 75 in unmittelbarer Nähe des Bremsklotzes 8 angelenkt.

Die gezeigten Ausführungsbeispiele können auch miteinander kombiniert werden, um eine erfindungsgemäße Klotzbremseinheit zu schaffen. Beispielsweise kann die geneigte Anordnung der Bremsflächen auch bei den Ausführungsbeispielen der Fig. 5 und 6 eingesetzt werden. Ferner ist es möglich, die Aufhängung des Bremsklotzes 8 anders zu gestalten und die Betätigung des Bremsklotzes 8 über einen bekannten Hebelmechanismus zu bewirken.

## Patentansprüche

1. Klotzbremseinheit, insbesondere für Schienenfahrzeuge mit mindestens einem Bremsklotz (8), der an ein Rad (4) eines Fahrzeuges zur Erzeugung einer Bremskraft anlegbar ist, eine Aufhängung (11, 12, 15, 18, 19, 21) für den Bremsklotz (8), die mit einem Fahrgestell verbindbar ist, und einer Betätigungseinrichtung zur Bewegung des mindestens einen Bremsklotzes (8), wobei der mindestens eine Bremsklotz (8) an einer radial nach innen gewandte Fläche (7) des Rades (4) zur Erzeugung der Bremskraft anlegbar ist, **dadurch gekennzeichnet, dass** mindestens zwei Bremsklötze (8) vorgesehen sind, die über eine Pendelaufhängung (11, 12, 15, 18, 19, 21) im wesentlichen radial nach außen jeweils gegen eine Fläche (7) des Rades (4) an gegenüberliegenden Seiten eines Radsteges (2) am Rad (4) angreifen.

2. Klotzbremseinheit nach Anspruch 1, **dadurch gekennzeichnet, dass** die an einem Spurkranz (5) ausgebildete Fläche (7) zu dem Radsteg (2) hin geneigt ausgebildet ist.

3. Klotzbremseinheit nach Anspruch 2, **dadurch gekennzeichnet, dass** bei Einleitung einer Kraft über Zugbügel (11, 12) eine Normalkraft zwischen Bremsklotz (8) und Fläche (7) und an einem Abschnitt (25) des Radsteges (2) und dem Bremsklotz (8) eine axial wirkende Bremskraft erzeugt wird.

4. Klotzbremseinheit nach einem der Ansprüche 1 bis 3, **dadurch gekennzeichnet, dass** mindestens jeder Bremsklotz (8) an zwei Zugbügeln (11) angelenkt ist.

5. Klotzbremseinheit nach Anspruch 4, **dadurch gekennzeichnet, dass** die Zugbügel (11) über Querlaschen (15, 18) miteinander gelenkig verbunden sind und parallelogrammartig zueinander verschiebbar sind.

6. Klotzbremseinheit nach einem der Ansprüche 1 bis 5, **dadurch gekennzeichnet, dass** ein mit jedem Bremsklotz (8) verbundener Zugbügel (11) über eine Haltelasche (19, 21, 40) mit dem Fahrgestell gelenkig verbunden ist.

7. Klotzbremseinheit nach Anspruch 6, **dadurch gekennzeichnet, dass** zwei voneinander beabstandete Haltelaschen (19, 21, 40) an dem Zugbügel und am Fahrgestell angelenkt sind.

8. Klotzbremseinheit nach Anspruch 7, **dadurch gekennzeichnet, dass** die Gelenkachsen (14, 17) der Haltelaschen (19, 21) mit den Gelenkachsen (14, 17) der mit dem Zugbügel (11) verbundenen Querlaschen (15, 18) fluchten.

9. Klotzbremseinhei nach einem der Ansprüche 6 bis 8, **dadurch gekennzeichnet, dass** eine Haltelasche (40) in unmittelbarer Nähe jedes Bremsklotzes (8) an einem Zugbügel (11) angelenkt ist.

10. Klotzbremseinheit nach einem der Ansprüche 1 bis 9, **dadurch gekennzeichnet, dass** an der ein Zugbügel (60, 70) über ein Druckstück (65, 74) mit jedem Bremsklotz (8) verbunden ist.

11. Klotzbremseinheit nach einem der Ansprüche 1 bis 10, **dadurch gekennzeichnet, dass** zur Betätigung jedes Bremsklotzes (8) ein Zugbügel (60) vorgesehen ist, der über zwei Haltelaschen (61, 62) an dem Fahrgestell angelenkt ist.

12. Klotzbremseinheit nach einem der Ansprüche 1 bis 11, **dadurch gekennzeichnet, dass** jeder Bremsklotz über eine Haltelasche (75) an dem Fahrgestell gehalten ist und über einen Zugbügel (70) hydraulisch, pneumatisch oder mechanisch betätigbar ist.

13. Klotzbremseinheit nach einem der Ansprüche 1 bis 12, **dadurch gekennzeichnet, dass** an der Aufhängung ein zweiter Bremsklotz (30) vorgesehen ist, der gegen die Lauffläche (6) des Rades (4) bewegbar ist.

14. Klotzbremseinheit nach einem der Ansprüche 1 bis 13, **dadurch gekennzeichnet, dass** die Klotzbremseinheit mehrere Bremsklötze (8) umfasst, die gegen jeweils eine radial nach innen gewandte Fläche zweier benachbarter Räder (4) anlegbar sind.

15. Klotzbremseinheit nach einem der Ansprüche 1 bis 14, **dadurch gekennzeichnet, dass** die Fläche (7') des Rades (4') und die gegenüberliegende Fläche des Bremsklotzes (8') zu einem Radsteg (2') hin geneigt ausgebildet ist.

16. Klotzbremseinheit nach Anspruch 15, **dadurch gekennzeichnet, dass** der Bremsklotz (8') gegen einen Abschnitt des Radsteges (2') zur Erzeugung einer Bremskraft bewegbar ist.

17. Klotzbremseinheit nach einem der Ansprüche 1 bis 16, **dadurch gekennzeichnet, dass** jeder Bremsklotz (8) eine elastische Reibfläche besitzt.

18. Klotzbremseinheit nach Anspruch 17, **dadurch gekennzeichnet, dass** jeder Bremsklotz (8) mehrere Reibelemente umfasst, die jeweils mittels einer Feder zur Reibfläche hin vorgespannt sind.

## Claims

1. Block brake unit, in particular for railway vehicles, with at least one brake block (8) which can be applied against a wheel (4) of a vehicle in order to generate a braking force, a suspension (11, 12, 15, 18, 19, 21) for the brake block (8) which can be connected to a bogie frame, and an operating system for displacing the at least one brake block (8), which at least one brake block (8) can be applied against a surface (7) of the wheel (4) facing radially inwards in order to generate the braking force, **characterised in that** at least two brake blocks (8) are provided, which engage essentially radially outwards on a respective surface (7) of the wheel (4) on opposing sides of a wheel web (2) on the wheel (4) via a pendulum suspension (11, 12, 15, 18, 19, 21).

2. Block brake unit as claimed in claim 1, **characterised in that** the surface (7) disposed on a rim (5) is inclined at an angle to the wheel web (2).

3. Block brake unit as claimed in claim 2, **characterised in that** when a force is transmitted via tension brackets (11, 12), a perpendicular force is generated between the brake block (8) and surface (7) and an axially acting brake force is generated on a section (25) of the wheel web (2) and the brake block (8).

4. Block brake unit as claimed in one of claims 1 to 3, **characterised in that** at least every brake block (8) is articulatingly mounted on two tension brackets (11 ).

5. Block brake unit as claimed in claim 4, **characterised in that** the tension brackets (11) are articulatingly connected to one another via transverse arms (15, 18) and are displaceable relative to one another in a parallelogram-type arrangement.

6. Block brake unit as claimed in one of claims 1 to 5, **characterised in that** a tension bracket (11) connected to every brake block (8) is articulatingly connected to the bogie frame via a retaining arm (19,21. 40).

7. Block brake unit as claimed in claim 6, **characterised in that** two mutually spaced retaining arms (19, 21, 40) are articulatingly linked to the tension bracket and to the bogie frame.

8. Block brake unit as claimed in claim 7, **characterised in that** the articulation axes (14, 17) of the retaining arms (19, 21) are in alignment with the articulation axes (14, 17) of the transverse arms (15, 18) connected to the tension bracket (11).

9. Block brake unit as claimed in one of claims 6 to 8, **characterised in that** a retaining arm (40) is articulatingly linked to a tension bracket (11) in the immediate vicinity of every brake block (8).

10. Block brake unit as claimed in one of claims 1 to 9, **characterised in that** a tension bracket (60, 70) is connected to every brake block (8) via a thrust piece (65, 74).

11. Block brake unit as claimed in one of claims 1 to 10, **characterised in that** a tension bracket (60) articulatingly linked to the bogie frame by means of two retaining arms (61, 62) is provided as a means of operating every brake block (8).

12. Block brake unit as claimed in one of claims 1 to 11, **characterised in that** every brake block is retained on the bogie frame by means of a retaining arm (75) and can be operated hydraulically, pneumatically or mechanically by means of a tension bracket (70).

13. Block brake unit as claimed in one of claims 1 to 12, **characterised in that** a second brake block (30) is provided on the suspension, which can be displaced against the running surface (6) of the wheel (4).

14. Block brake unit as claimed in one of claims 1 to 13, **characterised in that** the block brake unit comprises several brake blocks (8), which can be applied respectively against a radially inwardly facing surface of two adjacent wheels (4).

15. Block brake unit as claimed in one of claims 1 to 14, **characterised in that** the surface (7') of the wheel (4') and the oppositely lying surface of the brake block (8') is designed so as to be inclined at an angle to a wheel web (2').

16. Block brake unit as claimed in claim 15, **characterised in that** the brake block (8') can be displaced against a portion of the wheel web (2') in order to generate a braking force.

17. Block brake unit as claimed in one of claims 1 to 16, **characterised in that** every brake block (8) has an elastic friction surface.

18. Block brake unit as claimed in claim 17, **characterised in that** every brake block (8) has several friction elements, which are biassed towards the friction surface by means of a spring.

## Revendications

1. Ensemble de frein à sabots, en particulier pour véhicules sur rails, comportant au moins un sabot (8) de frein qui peut être appliqué sur une roue (4) d'un véhicule pour produire une force de freinage, une suspension (11, 12,15,18,19,21) pour le sabot (8) de frein qui peut être reliée à un bogie, et un équipement d'actionnement pour déplacer le sabot (8) de frein, le sabot (8) de frein pouvant, afin de produire la force de freinage, être appliqué contre une surface (7) de la roue (4) qui est tournée radialement vers l'intérieur, **caractérisé en ce qu'**il est prévu au moins deux sabots (8) de frein qui, au moyen d'une suspension (11, 12, 15, 18, 19, 21) pendulaire, agissent respectivement sur la roue (4) sensiblement radialement vers l'extérieur contre une surface (7) de la roue (4) sur des côtés opposés d'une âme (2) de roue.

2. Ensemble de frein à sabots suivant la revendication 1, **caractérisé en ce que** la surface (7), formée sur un boudin (5) de roue, est inclinée en direction de l'âme (2) de roue.

3. Ensemble de frein à sabots suivant la revendication 2, **caractérisé en ce que**, lors de l'application d'une force par l'intermédiaire d'étriers (11, 12) de traction, une force normale est produite entre le sabot (8) de frein et la surface (7), et une force de freinage agissant axialement est produite sur une partie (25) de l'âme (2) de roue et sur le sabot (8) de frein.

4. Ensemble de frein à sabots suivant l'une des revendications 1 à 3, **caractérisé en ce que** au moins chaque sabot (8) de frein est articulé sur deux étriers (11) de traction.

5. Ensemble de frein à sabots suivant la revendication 4, **caractérisé en ce que** les étriers (11) de traction sont mutuellement articulés par l'intermédiaire de pattes (15, 18) transversales, et peuvent être déplacés l'un par rapport à l'autre à la manière d'un parallélogramme.

6. Ensemble de frein à sabots suivant l'une des revendications 1 à 5, **caractérisé en ce qu'**un étrier (11) de traction relié à chaque sabot (8) de frein est articulé au bogie par l'intermédiaire d'une patte (19, 21, 40) de fixation.

7. Ensemble de frein à sabots suivant la revendication 6, **caractérisé en ce que** deux pattes (19, 21, 40) de fixation mutuellement distantes sont articulées sur l'étrier de traction et sur le bogie.

8. Ensemble de frein à sabots suivant la revendication 7, **caractérisé en ce que** les axes (14, 17) d'articulation des pattes (19, 21) de fixation sont alignés avec les axes (14, 17) d'articulation des pattes (15, 18) transversales reliées à l'étrier (11) de traction.

9. Ensemble de frein à sabots suivant l'une des revendications 6 à 8, **caractérisé en ce qu'**une patte (40) de fixation est articulée sur un étrier (11) de traction au voisinage immédiat de chaque sabot (8) de frein.

10. Ensemble de frein à sabots suivant l'une des revendications 1 à 9, **caractérisé en ce qu'**un étrier (60, 70) de traction est relié à chaque sabot (8) de frein par l'intermédiaire d'un élément (65, 74) de pression.

11. Ensemble de frein à sabots suivant l'une des revendications 1 à 10, **caractérisé en ce qu'**un étrier (60) de traction est prévu pour l'actionnement de chaque sabot (8) de frein, étrier qui est articulé sur le bogie par l'intermédiaire de deux pattes (61, 62) de fixation.

12. Ensemble de frein à sabots suivant l'une des revendications 1 à 11, **caractérisé en ce que** chaque sabot de frein est fixé sur le bogie par l'intermédiaire d'une patte (75) de fixation, et peut être actionné hydrauliquement, pneumatiquement ou mécaniquement par l'intermédiaire d'un étrier (70) de traction.

13. Ensemble de frein à sabots suivant l'une des revendications 1 à 12, **caractérisé en ce qu'**il est prévu sur la suspension, un deuxième sabot (30) de frein, qui peut être déplacé vers la bande (6) de roulement de la roue (4).

14. Ensemble de frein à sabots suivant l'une des revendications 1 à 13, **caractérisé en ce que** l'ensemble de frein à sabots comprend plusieurs sabots (8) de frein, qui peuvent être respectivement appliqués contre une surface tournée radialement vers l'intérieur de deux roues (4) voisines.

15. Ensemble de frein à sabots suivant l'une des revendications 1 à 14, **caractérisé en ce que** la surface (7') de la roue (4') et la surface opposée du sabot (8') de frein sont réalisées inclinées en direction d'une âme (2') de roue.

16. Ensemble de frein à sabots suivant la revendication 15, **caractérisé en ce que** le sabot (8') de frein peut être déplacé vers une partie de l'âme (2') de roue pour produire une force de freinage.

17. Ensemble de frein à sabots suivant l'une des revendications 1 à 16, **caractérisé en ce que** chaque sabot (8) de frein possède une surface de friction élastique.

18. Ensemble de frein à sabots suivant la revendication 17, **caractérisé en ce que** chaque sabot (8) de frein comprend plusieurs éléments de friction, qui sont respectivement précontraints en direction de la surface de friction au moyen d'un ressort.
